# EUROPÄISCHE PATENTSCHRIFT

(11) **EP 3 347 629 B1**
(45) Veröffentlichungstag und Bekanntmachung des Hinweises auf die Patenterteilung: **13.02.2019**
(21) Anmeldenummer: 16781050.6
(22) Anmeldetag: 01.09.2016
(51) Int. Cl.: F16J 15/34, F04C 2/107, F04C 15/00

(54) **WELLENGLEITRINGDICHTUNGSANORDNUNG**
SLIP-RING SEAL ARRANGEMENT FOR SHAFTS
ENSEMBLE JOINT D'ÉTANCHÉITÉ À BAGUE DE GLISSEMENT D'ARBRE

(30) Priorität: 09.09.2015 DE 102015011808
(43) Veröffentlichungstag der Anmeldung: 18.07.2018
(73) Patentinhaber: NETZSCH Pumpen & Systeme GmbH, 95100 Selb (DE)
(72) Erfinder: KREIDL, Johann, 84478 Waldkraiburg (DE); KAMAL, Hisham, 84478 Waldkraiburg (DE); TEKNEYAN, Mikael, 84559 Kraiburg (DE); NUEBL, Philipp, 83555 Gras Bahnhof (DE)
(86) Internationale Anmeldenummer: PCT/DE2016/000336
(87) Internationale Veröffentlichungsnummer: WO 2017/041775

(56) Entgegenhaltungen:
- DE-A1-102009 042 898
- US-A1- 2006 061 041
- US-A1- 2010 013 166

## Beschreibung

Die Erfindung betrifft eine Wellengleitringdichtungsanordnung gemäß dem Oberbegriff des Anspruchs 1 sowie einen Antriebsstrangabschnitt und eine Exzenterschneckenpumpe mit einer derartigen Wellengleitringdichtungsanordnung.

Aus der US 2006/0 061 041 A1 ist eine Wellengleitringdichtungsanordnung gemäß dem Oberbegriff des Anspruchs 1 bekannt. Diese sieht vor, dass eine Wellenhülse auf eine Welle aufgeschoben und an einem Ende der Wellenhülse mit der Welle drehfest mittels Schrauben verbunden ist, die durch einen zusätzlich auf die Wellenhülse aufgesteckten Stoppring radial geführt sind. An dem anderen Ende der Wellenhülse befindet sich ein aufgeschobener Wellengleitring, der mit der Wellenhülse drehfest verbunden und mittels eines Federringelements in Richtung des Stopprings gegen eine von der Wellenhülse radial beabstandete Gleitringanordnung vorgespannt ist. Damit die Gleitringanordung, beispielsweise beim Transport, den Stoppring nicht erreicht und gleichzeitig eine zentrierende Betriebsvorspannung aufrechterhalten wird, sind Positionshaken vorgesehen, die von den radialen Schrauben am Stoppring fixiert sind und in eine entsprechende Umfangsnut in der Gleitringanordnung greifen. Diese Positionshaken dienen ausschließlich dem Transport bzw. dem Ein- und Ausbau der Wellengleitringdichtungsanordnung in einem Antriebsstrang. Einmal eingebaut, wird ein Abstand zwischen der feststehenden Gleitringanordnung und dem Stoppring beibehalten, indem die Gleitringanordnung an ein feststehendes Gehäuse geschraubt wird, sodass die Positionshaken entfernt werden können.

Weiterer relevanter Stand der Technik findet sich in der deutschen Patentschrift DE 10 2013 101 185 B4.

Die Erfindung hat die Aufgabe, eine Wellengleitringdichtungsanordnung bereitzustellen, welche ein Setzen bzw. ein Verkeilen der Gleitringdichtung zuverlässig verhindert.

Diese Aufgabe ist erfindungsgemäß durch eine Wellengleitringdichtungsanordnung gelöst, die die im Anspruch 1 genannten Merkmale aufweist. Vorteilhafte Weiterbildungen sind in den abhängigen Ansprüchen beschrieben.

Eine Wellengleitringdichtungsanordnung gemäß der Erfindung umfasst eine Welle, die ein erstes Ende und ein zweites Ende hat, und eine Gleitringdichtung, die einen mit der Welle drehfest verbundenen Wellengleitring, dessen axiale Verschiebbarkeit zumindest in Richtung auf das erste Ende der Welle mittels eines Begrenzungselements begrenzt ist, und eine mit radialem Abstand von der Welle angeordnete Gleitringanordnung aufweist, die sich axial auf einer dem zweiten Ende der Welle zugewandten Seite des Wellengleitrings an diesen anschließt, sowie ferner einen auf der Welle abgestützten Haltering, dessen axiale Verschiebbarkeit zumindest in Richtung auf das zweite Ende der Welle begrenzt ist und der die Gleitringanordnung auf ihrer vom Wellengleitring abgewandten Seite bezüglich der Welle zentriert. Auf diese Weise kann die Gleitringdichtung beim Ein- und Ausbau der Welle aus einem Antriebsstrang auf der Welle verbleiben. Mit anderen Worten, die Gleitringdichtung muss nicht auseinandergebaut werden, um die Welle aus einer Vorrichtung entfernen zu können. Dabei hält der Haltering die Gleitringanordnung in jedem Betriebszustand der Welle zur Welle zentriert und verhindert somit automatisch ein Setzen bzw. Verkanten der Gleitringanordnung.

Vorteilhafterweise hat der Haltering eine der Gleitringanordung zugewandte, zu einer Wellenlängsachse abfallende Fläche. Auf diese Weise ist die Zentrierung der Gleitringanordnung bei der Montage des Halterings erleichtert und es erfolgt darüber hinaus automatisch eine Zentrierung einer zusammengebauten Wellengleitringdichtungsanordnung. Gemäß einem Ausführungsbeispiel ist die zur Zentrierung dienende Fläche eine sich konusförmig verjüngende Ringfläche.

Zwar kann die Gleitringanordnung aus einem Element bestehen, dennoch ist es insbesondere vorteilhaft, dass die Gleitringanordnung einen Gleitring und eine Gleitringaufnahme aufweist, wobei die Gleitringaufnahme mit dem Gleitring drehfest verbunden ist und der Wellengleitring zum Begrenzungselement axial federnd gelagert ist. Auf diese Weise können normierte Gleitringe verwendet werden, die mittels anwendungsspezifischer Gleitringaufnahmen an verschiedene Wellengleitringdichtungsanordnungen angepasst werden können.

Von Vorteil ist zudem, wenn der Haltering die Gleitringdichtung axial vorspannt, wodurch der Kontakt zwischen Haltering und Gleitringanordnung sowie eine entsprechende automatische Zentrierung sichergestellt sind.

Weiterhin ist vorteilhaft, dass die Gleitringdichtung unter Lösen von dem Haltering relativ zum Begrenzungselement verschiebbar ist, um die Vorspannung weiter erhöhen zu können. Auf diese Weise kann bei einem fest mit der Welle verbundenen Haltering, der sich mit der Welle dreht, im eingebauten Zustand der Wellengleitringdichtungsanordnung ein Spalt zwischen dem Haltering und der Gleitringanordnung geschaffen werden, der eine Reibung zwischen dem drehenden Haltering und der feststehenden Gleitringanordnung verhindert, und dennoch die erforderliche Betriebsvorspannung in der Gleitringdichtung erreicht werden.

Weiterhin vorteilhaft ist eine Wellengleitringdichtungsanordnung, bei der die Gleitringanordnung mittels mindestens eines Haltelements in ihrer am Haltering zentrierten Position gehalten ist. Dieses Haltelement kommt bei schwierigen Ein- bzw. Ausbausituation und/oder sehr schweren Bauteilen zum Einsatz und bietet eine zusätzliche Sicherheit beim Einfädeln der Wellengleitringdichtungsanordnung in eine Vorrichtung gegen ein Verrutschen oder Verkanten der Gleitringdichtung. Diese Haltelemente werden somit nur für den Ein- bzw. Ausbau verwendet und werden für den Betrieb wieder entfernt.

Die Erfindung betrifft auch einen Antriebsstrangabschnitt mit einer Antriebswelle, einer sich daran anschließenden Wellengleitringdichtungsanordnung wie oben beschrieben und einer die Wellengleitringdichtungsanordnung ortsfest umgebenden Aufnahmeeinrichtung, wobei die Aufnahmeeinrichtung zur Antriebswelle konzentrisch Ist und die Gleitringanordnung drehfest aufnimmt, und wobei die Aufnahmeeinrichtung in einem festen axialen Abstand zur Antriebswelle angeordnet ist. Ein derartiger Antriebsstrangabschnitt erleichtert das Einführen und Sichern der Wellengleitringdichtungsanordnung, wobei gleichzeitig die Gleitringanordnung von der Aufnahmeeinrichtung festgesetzt wird, sodass eine Drehung der Welle eine Relativbewegung des Wellengleitrings zur Gleitringanordnung bzw. zum Gleitring bewirkt.

In dem Antriebsstrangabschnitt ist es von Vorteil, wenn die Aufnahmeeinrichtung und die Antriebswelle eine axiale Verschiebung der Gleitringdichtung vom Begrenzungselement weg begrenzen. Auf diese Weise kann ein Durchrutschen der Wellengleitringdichtungsanordnung durch die Aufnahmeeinrichtung verhindert werden. Darüber hinaus kann so bei einem fest mit der Welle verbundenen Haltering, der sich mit der Welle dreht, ein Spalt zwischen dem Haltering und der Gleitringanordnung geschaffen werden, der eine Reibung zwischen dem drehenden Haltering und der feststehenden Gleitringanordnung verhindert, und dennoch die erforderliche Betriebsvorspannung zwischen Wellengleitring und Gleitring erreicht werden.

Es ist insbesondere vorteilhaft, wenn erst bei Erreichen einer vorgegebenen Betriebsvorspannung der Gleitringdichtung eine radiale Öffnung in der Welle und eine radiale Öffnung in der Antriebswelle miteinander fluchten. Auf diese Weise wird bei einem drehfest mit der Welle verbundenen Haltering bereits beim Einbau der Wellengleitringdichtungsanordnung zwangsweise ein Spalt zwischen dem Haltering und der Gleitringanordnung geschaffen, und die Welle kann erst dann mit der Antriebswelle verbunden werden, indem ein Sicherungsstift in die miteinander fluchtenden Öffnungen gesteckt wird.

Vorteilhafterweise kommen die obige Wellengleitringdichtungsanordnung oder der Antriebsstrangabschnitt in einer Exzenterschneckenpumpe zum Einsatz. Bei dieser ist ein schneller und unkomplizierter Ein- bzw. Ausbau besonders wichtig, sodass zu diesem Zweck die Wellengleitringdichtungsanordnung als Einheit aus Welle und Gleitringdichtung ausgebaut und, falls gewünscht, erst im Anschluss an den Ausbau in ihre Einzelteile zerlegt werden kann.

Die Erfindung wird nachfolgend anhand schematischer Zeichnungen erläutert.
Es zeigen:
- Fig. 1: ein Ausführungsbeispiel einer erfindungsgemäßen Wellengleitringdichtungsanordnung in einer Aufnahmeeinrichtung,
- Fig. 2: den Schnitt A-A aus Fig. 1 mit einer symbolisch dargestellten Antriebswelle, und
- Fig. 3: eine perspektivische Explosionsansicht der Wellengleitringdichtungsanordnung mit Aufnahmeeinrichtung gemäß den Fign. 1 und 2.

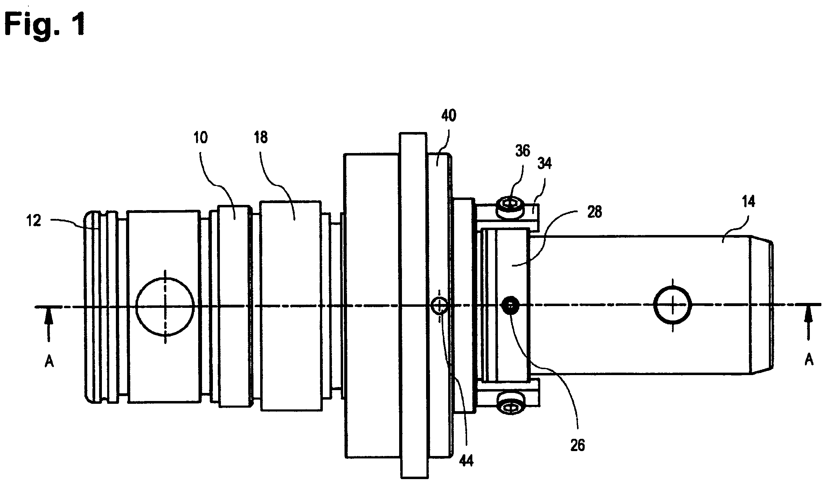

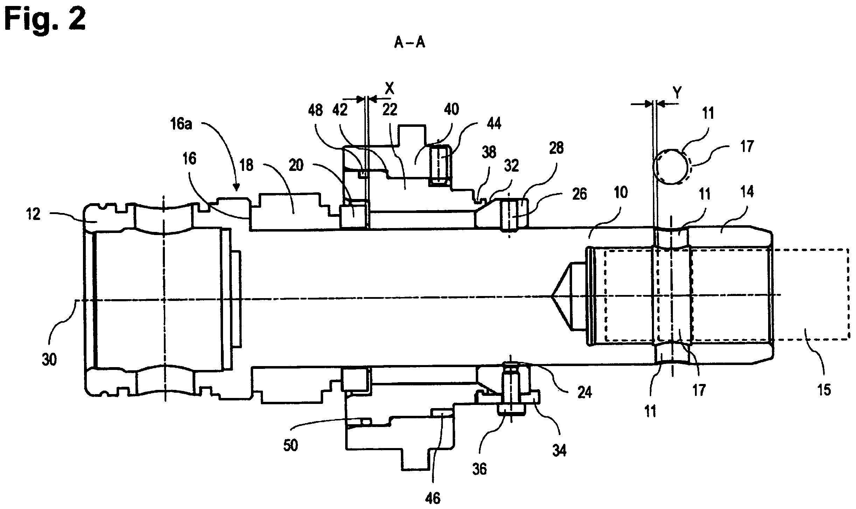

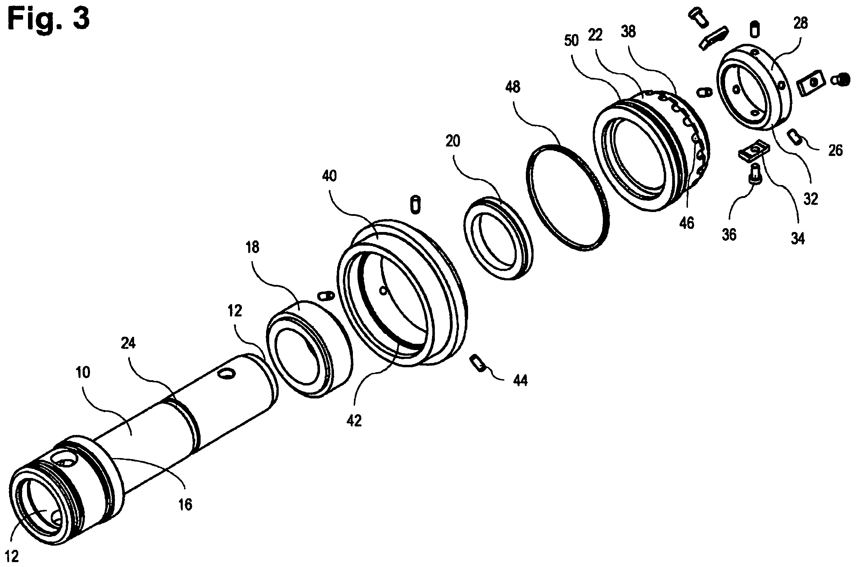

Fig. 1 zeigt eine Wellengleitringdichtungsanordnung gemäß der Erfindung, deren Einzelteile am besten in dem Schnitt A-A in Fig. 2 und in der perspektivischen Explosionsansicht in Fig. 3 zu erkennen sind.

Die Wellengleitringdichtungsanordnung hat eine Welle 10, welche an ihrem ersten Ende 12 eine Gelenkaufnahme und an ihrem zweiten Ende 14 eine Aufnahme für eine Antriebswelle 15 hat. Des Weiteren weist die Wellengleitringdichtungsanordnung, gesehen von links nach rechts in der Fig. 2, einen drehfest mit der Welle 10 verbundenen und an einem als Wellenschulter 16 ausgebildeten Begrenzungselement 16a anliegenden Wellengleitring 18, einen mit radialem Abstand auf die Welle aufgeschobenen Gleitring 20, eine mit größerem radialen Abstand zur Welle 10 aufgeschobene, den Gleitring 20 haltende Gleitringaufnahme 22, sowie einen mittels einer Wellennut 24 über Stifte 26 mit der Welle 10 verbundenen Haltering 28 auf, der eine zur Wellenlängsachse 30 geneigte Ringfläche 32 hat, mit welcher er an einer komplementären Fläche der Gleitringaufnahme 22 anliegt. Dabei bilden der Gleitring 20 und die Gleitringaufnahme 22 eine Gleitringanordnung 20, 22. Des Weiteren bilden der Wellengleitring 18 und die Gleitringanordnung 20, 22 eine Gleitringdichtung 18, 20, 22. Nicht gezeigt, aber durch einen Spalt X angedeutet, ist ein ebenfalls zur Gleitringanordnung 20, 22 gehörendes Federelement in Form von auf die Welle aufgesteckten Sinusfedern bzw. in Form von um die Welle umlaufend angeordneten Schraubenfedern, welches zwischen dem Gleitring 20 und der Gleitringaufnahme 22 liegt und beide axial zueinander federnd lagert.

Die gesamte Gleitringdichtung 18, 20, 22 ist somit zwischen der Wellenschulter 16 und dem Haltering 28 eingeschlossen und an der Welle 10 gehalten. Die Position des Halterings 28 auf der Welle 10 ist mittels eines axialen Abstands einer Wellennut 24 von der Wellenschulter 16 so gewählt, dass die Gleitringdichtung 18, 20, 22 eine Vorspannung erhält und die Gleitringaufnahme 22 mit dem Haltering 28 In Kontakt sowie zur Welle 10 zentriert bleibt. Um dies auch beim Transport oder beim Ein- und Ausbau der Wellengleitringdichtungsanordnung sicherzustellen, sind in dem Ausführungsbeispiel als Halteklammer 34 ausgeführte Haltelemente 34 vorhanden, welche mittels Schrauben 36 so an dem Haltering 28 befestigt sind, dass sie in ein komplementäres hakenförmiges Ende der Gleitringaufnahme 22 in Gestalt einer Haltelementnut 38 greifen, um die Gleitringaufnahme 22 an dem Haltering 28 zu sichern. Diese Halteklammern 34 sind insbesondere bei besonders schwierigen Ein- und Ausbaubedingungen bzw. bei besonders schweren und großen Bauteilen erforderlich und werden auch dann nur zum Ein- und Ausbau der Wellengleitringdichtungsanordnung angebracht.

Bei der Montage der Wellengleitringdichtungsanordnung wird zuerst der Wellengleitring 18 auf die Welle 10 geschoben, bis er an der Wellenschulter 16 anliegt; dann wird die Gleitringanordnung 20, 22 auf die Welle 10 geschoben und mit dem Wellengleitring 18 in Anlage gebracht; anschließend wird der Haltering 28 aufgeschoben und seine geneigte Fläche 32 gegen die komplementär geneigte Fläche der Gleitringaufnahme 22 gedrückt, um den Haltering 28 bis über die Wellennut 24 zu schieben, woraufhin er mittels in die Wellennut 24 eingreifender Stifte 26 axial auf der Welle 10 fixiert wird.

Bei der Montage der Wellengleitringdichtungsanordnung in einem Antriebsstrangabschnitt wird erstere axial in eine Aufnahmeeinrichtung 40 geschoben. Die Aufnahmeeinrichtung 40 ist hier ein aus einem drehfesten Gehäuse auskragender Ring mit einem gestuften Innenumfang, wodurch eine Aufnahmeschulter 42 gebildet ist, welche die Endposition der Wellengleitringdichtungsanordnung definiert und eine weitere axiale Verschiebung der Wellengleitringdichtungsanordnung verhindert. Zur drehfesten Sicherung der Wellengleitringdichtungsanordnung an der Aufnahmeeinrichtung 40 sind Stifte 44 in der Aufnahmeeinrichtung 40 oder alternativ Vorsprünge an der Aufnahmeeinrichtung 40 vorhanden, die radial einwärts vorstehen und in entsprechende umfangsseitige Axialnuten 46 auf der Außenseite der Gleitringaufnahme 22 eingreifen. Folglich handelt es sich bei der vorliegenden drehfesten Sicherung um einen formschlüssigen Kontakt zwischen der Gleitringaufnahme 22 und der Aufnahmeeinrichtung 40.

Zur Abdichtung zwischen Gleitringaufnahme 22 und Aufnahmeeinrichtung 40 ist eine O-Ring-Dichtung 48 in einer äußeren O-Ring-Nut 50 der Gleitringaufnahme 22 vorgesehen.

Um die Welle 10 mit einer Antriebswelle 15 (Fig. 2) zu verbinden, muss die Welle 10, ausgehend von dem in Fig. 2 dargestellten Zustand, mittels der Gleitringanordnung 18, 20, 22 gegen die Aufnahmeschulter 42 bzw. gegen die Stifte 44 gedrückt werden, sodass im nicht gezeigten montierten Zustand aufgrund der federnden Lagerung des Gleitrings 20 ein Spalt zwischen dem Haltering 28 und der Gleitringaufnahme 22 entsteht. Auf diese Welse wird gleichzeitig ein anfänglicher Versatz Y zwischen radialen Öffnungen 11 in der Welle 10 und einer radialen Öffnung 17 in der Antriebswelle 15 überwunden, sodass die Öffnungen 11, 17 miteinander fluchten. Dieser anfängliche Versatz Y ist in der Fig. 2 zusätzlich mittels zweier Kreise über dem zweiten Ende 14 der Welle 10 dargestellt, wobei die Kreise die jeweiligen Öffnungen 11, 17 in einer Draufsicht auf die Welle 10 symbolisieren. Erst wenn der Versatz Y überwunden, d.h. nicht mehr vorhanden ist, kann ein nicht dargestellter Verbindungsbolzen durch die Öffnungen 11, 17 geschoben werden, um die beiden Wellen 10, 15 miteinander zu verbinden. Der Spalt X und der Versatz Y unterliegen dabei folgender Beziehung: X > Y.

In der Fig. 2 Ist die Antriebswelle 15 und ihre radiale Öffnung 17 gestrichelt dargestellt. Die Öffnungen 11 der Welle 10 haben den gleichen Durchmesser wie die Öffnung 17 in der Antriebswelle 15. Die sich zwischen den Öffnungen 11 erstreckenden, ununterbrochenen, zueinander parallelen Linien zeigen die Breite einer Ringnut, die aufgrund eines Entgratungsvorgangs an der Innenumfangsfläche des zweiten Endes 14 der Welle 10 entsteht. Wird die Welle 10 von der Antriebswelle 15 getrennt, so federt die Gleitringaufnahme 22 zurück in den Formschluss mit der geneigten Fläche 32 des Halterings 28, sodass beim Herausnehmen der Wellengleitringdichtungsanordnung aus der Aufnahmeeinrichtung 40 die Gleitringanordnung 20, 22 automatisch zentriert bleibt.

Nachfolgend werden einzelne vorteilhafte Modifikationen erläutert, die individuell mit oder anstelle der zuvor beschriebenen Merkmale vorgesehen werden können.
- Die axiale Verschiebbarkeit des Wellengleitrings 18 ist zumindest in Richtung auf das erste Ende 12 der Welle 10 begrenzt, vorteilhafterweise durch die Wellenschulter 16. Die Wellenschulter 16 stellt einen Anschlag dar, der eine schnelle und einfache Montage ermöglicht. Diese zumindest einseitige Begrenzung der Verschiebbarkeit kann auch durch einen vom ersten Ende 12 der Welle 10 aufgeschobenen Sicherungsring erfolgen, sodass auf eine Wellenschulter 16 verzichtet werden kann. Auf diese Weise kann die Welle 10 im Wesentlichen zylinderförmig ausgebildet sein, was die Fertigung der Welle 10 vereinfacht und Wellenmaterial einspart. Ferner kann der Wellengleitring 18 auch mittels eines lösbaren Befestigungselements, z.B. Stifte oder Schrauben, an einer Welle 10 ohne Wellenschulter 16 axial in beide Richtungen unverschiebbar befestigt werden. Auf diese Weise würde beim Öffnen der Gleitringdichtung 18, 20, 22 durch ein Abnehmen der Halterings 28 der Wellengleitring 18 auf der Welle 10 verbleiben. Die gleichen Überlegungen gelten analog auch für den Haltering 28, dessen axiale Verschiebbarkeit zumindest in Richtung auf das zweite Ende 14 der Welle 10 begrenzt sein muss.
- Der Haltering 28 zentriert die Gleitringanordnung 20, 22 mittels einer der Gleitringanordung 20, 22 zugewandten, zu einer Wellenlängsachse 30 abfallenden Fläche. Vorteilhafterweise ist die abfallende Fläche eine gefaste Fläche, die in ihrer Herstellung einfach ist. Ebenso möglich sind aber auch konkave oder konvexe Flächen, die entsprechend gewünschter Zentrierungseigenschaften gewählt werden können.
- Die Gleitringanordnung 20, 22 weist vorteilhafterweise zusätzlich zu dem Gleitring 20 und der Gleitringaufnahme 22 ein Federelement auf, dass zwischen beiden angeordnet ist. Dieses dient zur Vorspannung des Gleitrings 20 gegen den Wellengleitring 18 zur Erreichung einer betriebsspezifischen Abdichtung. Vorteilhafterweise ist das Federelement durch eine oder mehrere Sinusfedern gebildet, die wie die anderen Elemente auf der Welle 10 aufgesteckt werden, da sie so einfach und den erforderlichen Federeigenschaften entsprechend gewählt bzw. ausgetauscht werden können. Kostengünstig sind auch Schraubenfedern, die um die Welle 10 umlaufend an der Gleitringaufnahme 22 angebracht sind und sich axial zum Gleitring 20 erstrecken.
- Indem der Haltering 28 den Gleitring 20 der Gleitringanordnung 20, 22 gegen den Wellengleitring 18 axial vorspannt, kann eine Grundvorspannung zur automatischen Zentrierung erreicht werden. Vorteilhafterweise kann zugleich eine Betriebsvorspannung dadurch erreicht werden, dass der Haltering 28 relativ zur Welle drehend gelagert ist und in der Lage ist, mit der Gleitringanordnung 20, 22 aufgrund des Reibschlusses der zur Wellenlängsachse abfallenden Fläche 32 mit der komplementären Fläche an der Gleitringaufnahme 22 mitzudrehen. Dies wird beispielsweise mittels eines nicht dargestellten zweiteiligen Halterings 28 erreicht, dessen innerer Ring mit der Welle 10 drehfest verbunden ist und dessen äußerer Ring, der die abfallende Fläche 32 aufweist, auf dem inneren Ring drehend gelagert ist. Das Vorsehen eines Abstands zwischen Haltering 28 und der Gleitringaufnahme 22 der Gleitringanordnung 20, 22 im Betriebszustand wird damit überflüssig.
- Vorteilhaft ist, beispielsweise bei einem sich mit der Welle 10 mitdrehenden Haltering 28, dass die Gleitringanordnung 20, 22 unter Lösen von dem Haltering 28 relativ zum Wellengleitring 18 verschiebbar ist, um die Vorspannung weiter zu erhöhen und die Betriebsvorspannung zu erreichen, wobei gleichzeitig ein Abstand in Form eines Spalts zwischen dem Haltering 28 und der Gleitringaufnahme 22 der Gleitringanordnung 20, 22 geschaffen wird. Auf diese Weise kann durch eine geringere Vorspannung der Wellengleitringdichtungsanordnung während Transport und Lagerung die Gleitringdichtung geschont und vor einem frühzeitigen Verschleiß bewahrt werden.
- Die Kombination aus einem Haltering 28 mit abfallender Fläche zur Zentrierung und einem Halteelement 34, welches in der Lage ist, die Gleitringaufnahme 22 der Gleitringanordnung 20, 22 zur Welle 10 zentriert zu halten, ist besonders vorteilhaft, da die Zentrierung nicht erst durch das/die Haltelement/-e erreicht wird, sondern bereits davor vorhanden ist, sodass schon bei der Anbringung des/der Haltelements/-e ein Verkanten der Gleitringanordnung 20, 22 ausgeschlossen ist.
- Gemäß einer Variante kann auf die Aufnahmeschulter 42 verzichtet werden und die axiale Begrenzung auch nur mittels der in den Axialnuten 46 befindlichen Stifte 44 sichergestellt sein, wobei die Axialnuten 46 dann, wie in der Figur 3 gezeigt, einen Anschlag haben müssen, d.h. nicht durchgehend sein dürfen. Letzteres wäre jedoch möglich, wenn die Betriebsvorspannung bereits aufgrund eines relativ zur Welle 10 drehenden Halterings 28 erreicht wäre. Des Weiteren kann die O-Ring-Nut 50 mit dem entsprechenden O-Ring 48 auch in der Innenumfangsfläche der Aufnahmeeinrichtung 40 angeordnet sein.
- Alternativ ist statt des Gleitrings 20 der Wellengleitring 18 zum Begrenzungselement 16a auf die oben beschriebene Weise axial federnd gelagert, so dass auf eine axial federnde Lagerung zwischen Gleitring 20 und Gleitringaufnahme 22 verzichtet werden kann.

### Bezugszeichenliste

- 10: - Welle
- 11: - radiale Öffnungen der Welle
- 12: - erstes Wellenende
- 14: - zweites Wellendende
- 15: - Antriebswelle
- 16: - Wellenschulter
- 16a: - Begrenzungselement
- 17: - radiale Öffnung der Antriebswelle
- 18: - Wellengleitring
- 20: - Gleitring
- 22: - Gleitringaufnahme
- 24: - Wellennut
- 26: - Halteringstift
- 28: - Haltering
- 30: - Wellenlängsachse
- 32: - geneigte Fläche
- 34: - Halteelement
- 36: - Halteelementschraube
- 38: - Halteelementnut
- 40: - Aufnahmeeinrichtung
- 42: - Aufnahmeschulter
- 44: - Aufnahmestift
- 46: - Axialnut
- 48: - O-Ring-Dichtung
- 50: - O-Rlng-Nut
- X: - Spalt zwischen Gleitring und Gleitringaufnahme
- Y: - anfänglicher Versatz zwischen den radialen Öffnungen der Welle und der Antriebswelle

## Patentansprüche

1. Wellengleitringdichtungsanordnung, mit
- einer Welle (10), die ein erstes Ende (12) und ein zweites Ende (14) hat, und
- einer Gleitringdichtung (18, 20, 22), die
-- einen mit der Welle (10) drehfest verbundenen Wellengleitring (18), dessen axiale Verschiebbarkeit zumindest in Richtung auf das erste Ende (12) der Welle (10) mittels eines Begrenzungselements (16a) begrenzt ist, und
-- eine mit radialem Abstand von der Welle (10) angeordnete Gleitringanordnung (20, 22) aufweist, die sich axial auf einer dem zweiten Ende (14) der Welle (10) zugewandten Seite des Wellengleitrings (18) an diesen anschließt,
**gekennzeichnet durch**
- einen auf der Welle (10) abgestützten Haltering (28), dessen axiale Verschiebbarkeit zumindest in Richtung auf das zweite Ende (14) der Welle (10) begrenzt ist und der die Gleitringanordnung (20, 22) auf ihrer vom Wellengleitring (18) abgewandten Seite bezüglich der Welle (10) zentriert.

2. Wellengleitringdichtungsanordnung nach Anspruch 1,
**dadurch gekennzeichnet, dass** der Haltering (28) eine der Gleitringanordung (20, 22) zugewandte, zu einer Wellenlängsachse (30) abfallende Fläche aufweist.

3. Wellengleitringdichtungsanordnung nach einem der vorhergehenden Ansprüche,
**dadurch gekennzeichnet, dass** die Gleitringanordnung (20, 22) einen Gleitring (20) und eine Gleitringaufnahme (22) aufweist, wobei die Gleitringaufnahme (22) mit dem Gleitring (20) drehfest verbunden ist und der Wellengleitring (18) zum Begrenzungselement (16a) axial federnd gelagert ist.

4. Wellengleitringdichtungsanordnung nach einem der vorhergehenden Ansprüche,
**dadurch gekennzeichnet, dass** der Haltering (28) die Gleitringdichtung (18, 20, 22) axial vorspannt.

5. Wellengleitringdichtungsanordnung nach Anspruch 4,
**dadurch gekennzeichnet, dass** die Gleitringdichtung (18, 20, 22) unter Lösen von dem Haltering (28) relativ zum Begrenzungselement (16a) verschiebbar ist, um die Vorspannung weiter zu erhöhen.

6. Wellengleitringdichtungsanordnung nach einem der vorhergehenden Ansprüche,
**dadurch gekennzeichnet, dass** die Gleitringanordnung (20, 22) mittels mindestens eines Haltelements (34) in ihrer am Haltering (28) zentrierten Position gehalten ist.

7. Antriebsstrangabschnitt mit einer Antriebswelle (15), einer sich daran anschließenden Wellengleitringdlchtungsanordnung nach einem der vorhergehenden Ansprüche und einer die Wellengleitringdichtungsanordnung ortsfest umgebenden Aufnahmeeinrichtung (40), wobei die Aufnahmeeinrichtung (40) zur Antriebswelle (15) konzentrisch ist und die Gleitringanordnung (20, 22) drehfest aufnimmt, und wobei die Aufnahmeeinrichtung (40) in einem festen axialen Abstand zur Antriebswelle angeordnet ist.

8. Antriebsstrangabschnitt nach Anspruch 7,
**dadurch gekennzeichnet, dass** die Aufnahmeeinrichtung (40) und die Antriebswelle (15) eine axiale Verschiebung der Gleitringdichtung (18, 20, 22) vom Begrenzungselement (16a) weg begrenzt.

9. Antriebsstrangabschnitt nach Anspruch 7 oder 8,
**dadurch gekennzeichnet, dass** erst bei Erreichen einer vorgegebenen Betriebsvorspannung der Gleitringdichtung (18, 20, 22) eine radiale Öffnung (11) in der Welle (10) und eine radiale Öffnung (17) in der Antriebswelle (15) miteinander fluchten.

10. Exzenterschneckenpumpe mit einer Wellengleitringdichtungsanordnung oder einem Antriebsstrangabschnitt nach einem der vorhergehenden Ansprüche.

## Claims

1. A shat slip-ring seal arrangement comprising
- a shaft (10), which has a first end (12) and a second end (14), and
- a slip-ring seal (18, 20, 22), which
∘ has a shaft slip-ring (18), which is connected to the shaft (10) in a rotationally fixed manner and the axial displaceability of which is limited at least in the direction of the first end (12) of the shaft (10) by means of a limiting element (16a), and
∘ a slip-ring arrangement (20, 22), which is arranged at a radial distance from the shaft (10) and which is axially adjacent to the shaft slip-ring (18) on a side of the latter facing the second end (14) of the shaft (10),
**characterized by**
- a holding ring (28), which is supported on the shaft (10) and the axial displaceability of which is limited at least in the direction of the second end (14) of the shaft (10) and which centers the slip-ring arrangement (20, 22) on its side facing away from the shaft slip-ring (18) relative to the shaft (10).

2. The shaft slip-ring seal arrangement according to claim 1,
**characterized in that** the holding ring (28) has a surface, which faces the slip-ring arrangement (20, 22) and which slopes to a longitudinal shaft axis (30).

3. The shaft slip-ring seal arrangement according to one of the preceding claims, **characterized in that** the slip-ring arrangement (20, 22) has a slip-ring (20) and a slip-ring accommodation (22), wherein the slip-ring accommodation (22) is connected to the slip-ring (20) in a rotationally fixed manner and the shaft slip-ring (18) is supported in an axially resilient manner to the limiting element (16a).

4. The shaft slip-ring seal arrangement according to one of the preceding claims, **characterized in that** the holding ring (28) axially biases the slip-ring seal (18, 20, 22).

5. The shaft slip-ring seal arrangement according to claim 4,
**characterized in that** the slip-ring seal (18, 20, 22) can be displaced relative to the limiting element (16a) by releasing the holding ring (28), so as to further increase the bias.

6. The shaft slip-ring seal arrangement according to one of the preceding claims, **characterized in that** the slip-ring arrangement (20, 22) is held in its position, which is centered on the holding ring (28), by means of at least one holding element (34).

7. A drive train section comprising a drive shaft (15), a shaft slip-ring arrangement adjacent thereto according to one of the preceding claims and an accommodating device (40), which surrounds the shaft slip-ring seal arrangement in a stationary manner, wherein the accommodating device (40) is concentric to the drive shaft (15) and accommodates the slip-ring arrangement (20, 22) in a rotationally fixed manner, and wherein the accommodation device (40) is arranged at a fixed axial distance to the drive shaft.

8. The drive train section according to claim 7, **characterized in that** the accommodating device (40) and the drive shaft (15) limits an axial displacement of the slip-ring seal (18, 20, 22) away from the limiting element (16a).

9. The drive train section according to claim 7 or 8, **characterized in that** a radial opening (11) in the shaft (10) and a radial opening (17) in the drive shaft (15) are aligned with one another only upon reaching a predetermined operating bias voltage of the slip-ring seal (18, 20, 22).

10. An eccentric screw pump comprising a shaft slip-ring seal arrangement or a drive train section according to one of the preceding claims.

## Revendications

1. Ensemble de garniture étanche à anneau glissant d'arbre, comprenant :
- un arbre (10) possédant une première extrémité (12) et une deuxième extrémité (14), et
- une garniture étanche à anneau glissant (18, 20, 22), laquelle comporte
∘ un anneau glissant d'arbre (18) relié de façon solidaire en rotation à l'arbre (10), dont la possibilité de déplacement axial est limitée au moins dans la direction vers la première extrémité (12) de l'arbre (10) au moyen d'un élément de limitation (16a), et
∘ un ensemble d'anneau glissant (20, 22) disposé à une distance radiale de l'arbre (10), lequel se raccorde axialement à l'anneau glissant d'arbre (18) sur un côté de celui-ci tourné vers la deuxième extrémité (14) de l'arbre (10),
**caractérisé par**
- un anneau de retenue (28) appuyé sur l'arbre (10), dont la possibilité de déplacement axial est limitée au moins dans la direction vers la deuxième extrémité (14) de l'arbre (10) et lequel centre l'ensemble d'anneau glissant (20, 22) par rapport à l'arbre (10) sur son côté opposé à l'anneau glissant d'arbre (18).

2. Ensemble de garniture étanche à anneau glissant selon la revendication 1,
**caractérisé en ce que** l'anneau de retenue (28) présente une surface inclinée vers un axe longitudinal d'arbre (30), tournée vers l'ensemble d'anneau glissant (20, 22).

3. Ensemble de garniture étanche à anneau glissant selon l'une des revendications précédentes,
**caractérisé en ce que** l'ensemble d'anneau glissant (20, 22) présente un anneau glissant (20) et un logement d'anneau glissant (22), le logement d'anneau glissant (22) étant relié de façon solidaire en rotation à l'anneau glissant (20) et l'anneau glissant d'arbre (18) étant monté de manière axialement élastique par rapport à l'élément de limitation (16a).

4. Ensemble de garniture étanche à anneau glissant selon l'une des revendications précédentes,
**caractérisé en ce que** l'anneau de retenue (28) précontraint axialement la garniture étanche à anneau glissant (18, 20, 22).

5. Ensemble de garniture étanche à anneau glissant selon la revendication 4,
**caractérisé en ce que** la garniture étanche à anneau glissant (18, 20, 22) peut être déplacée par rapport à l'élément de limitation (16a) en détachant l'anneau de retenue (28).

6. Ensemble de garniture étanche à anneau glissant selon l'une des revendications précédentes,
**caractérisé en ce que** l'ensemble d'anneau glissant (20, 22) est maintenu dans sa position centrée sur l'anneau de retenue (28) au moyen d'au moins un élément de retenue (34).

7. Section de chaîne cinématique comprenant un arbre d'entraînement (15), un ensemble de garniture étanche à anneau glissant raccordé à celui-ci selon l'une des revendications précédentes, et un dispositif de réception (40) entourant fixement l'ensemble de garniture étanche à anneau glissant, dans laquelle le dispositif de réception (40) est concentrique à l'arbre d'entraînement (15) et reçoit l'ensemble d'anneau glissant (20, 22) de façon solidaire en rotation, et dans laquelle le dispositif de réception (40) est disposé à une distance axiale fixe de l'arbre d'entraînement.

8. Section de chaîne cinématique selon la revendication 7, **caractérisée en ce que** le dispositif de réception (40) et l'arbre d'entraînement (15) limitent un déplacement axial de la garniture étanche à anneau glissant (18, 20, 22) à distance de l'élément de limitation (16a).

9. Section de chaîne cinématique selon la revendication 7 ou 8,
**caractérisée en ce qu'**une ouverture radiale (11) dans l'arbre (10) et une ouverture radiale (17) dans l'arbre d'entraînement (15) sont alignées seulement lors de l'atteinte d'une précontrainte de service prédéfinie de la garniture étanche à anneau glissant (18, 20, 22).

10. Pompe à vis excentrique comprenant un ensemble de garniture étanche à anneau glissant ou une section de chaîne cinématique selon l'une des revendications précédentes.
